Europäisches Patentamt

European Patent Office

Office européen des brevets

(11) Publication number: **0 285 208**
**A1**

## EUROPEAN PATENT APPLICATION

(21) Application number: 88200523.4

(51) Int. Cl.⁴: **C05F 3/00** , **C05F 7/00**

(22) Date of filing: 22.03.88

(30) Priority: 23.03.87 NL 8700675

(43) Date of publication of application:
05.10.88 Bulletin 88/40

(84) Designated Contracting States:
BE CH DE FR GB LI NL

(71) Applicant: STICHTING KOPROMIX
c/o Voortstreven 8
NL-6871 DT Renkum(NL)

(72) Inventor: van Wessel, Gerardus Wilhelmus
Koningsweg 19
NL-6942 NV Didam(NL)
Inventor: Kraayvanger, Hendrikus Bernardus
Maria
Haamstraat 8
NL-6942 HN Didam(NL)
Inventor: van der Sleen, Jan
Berkenlaan 29
NL-7917 PB Geesbrug(NL)

(74) Representative: Smulders, Theodorus A.H.J.
et al
Vereenigde Octrooibureaux Nieuwe Parklaan
107
NL-2587 BP 's-Gravenhage(NL)

(54) A process for treating manure and/or waste water sludge, manure granule produced using said process, and a method of fertilizing land.

(57) A process for treating manure and/or waste water sludge to form a granule paroduct. According to the invention, manure and/or waste water sludge is mixed with a quantity of calcium oxide such that the temperature of the mixture increases to, and for some time remains at, at least 70°C. The mixture is reacted until substantial completion of the reaction of calcium oxide with water, and subsequently mixed with a natural or synthetic binder. The resulting product is granulated.

EP 0 285 208 A1

## A process for treating manure and/or waste water sludge, manure granule produced using said process, and a method of fertilizing land.

The present invention relates to a process for treating manure and/or waste water sludge to form a granular product.

Owing to the expanding bioindustry and the increasing number of waste water purification plants, the production of various kinds of semi-liquid manure, commonly called slurry, and waste water sludge has increased to such an extent that their removal and processing are going to present a problem. As used herein, the term "slurry" means the manure produced in particular in the bioindustry, which generally has rather a low dry content. Examples are mixed pig's manure, mixed calf-manure, mixtures thereof mixtures thereof with dry chicken manure, and the like. Manure means solid and liquid excrements from farm animals and other animals, and mixtures thereof, possibly in combination with other components. The main components of slurry are urine and fecal matter, which may be mixed with litter particles, and water used for scrubbing and/or washing.

British patent 1,381,877 discloses a process for producing a powdered product by mixing manure, mainly chicken manure, with peat, straw, or wood products, and with quicklime.

It is an object of the present invention to provide a solution for the problem of processing slurry and/or waste water sludge to produce a product having a sufficiently high dry content, is free from living pathogenic germs originally occurring in the manure or the sludge, can easily be packaged and transported, is composed of environmentally friendly or neutral substances, and may be standardized with or without the addition of adjuvants. Another object of the invention is to provide a granular, i.e., pelletized product.

The process according to the invention is characterized by mixing the manure and/or the waste water sludge with calcium oxide, with the proportion of calcium being such that the temperature of the mixture increases to, and for some time remains at, at least 70°C, reacting the mixture until substantial completion of the reaction of calcium oxide with water, subsequently mixing the mixture with a natural or synthetic binder, and granulating the resulting product.

The quantity of calcium oxide relative to the quantity of slurry or waste water sludge is selected so high that the temperature of the mixture will rise to at least 70°C, and preferably to more than 110°C. Naturally, it is a simple matter for a person skilled in the art to determine how much calcium oxide is required, on the basis of the heat content of the product and its water content, but generally speaking this quantity will range from 0.1 to 1.0 part by weight of calcium oxide per part by weight of slurry or sludge.

The temperature should remain, or be maintained at, at least 70°C for some time. This can be done by adapting the quantity of CaO or by external heating. The temperature of at least 70°C is preferably maintained for 1 hour, specifically 3 hours. The treatment of at least 3 hours at 70°C has the advantage that this product is basically free from living pathogenic germs.

There is possibility, and this has major advantages for the purposes of the present invention, for the manure mixture to be first fermented in a biogas plant, so that first the final product may be substantially odourless, and second the biogas thereby produced can be used during the drying of the final product.

The fermented or unfermented manure or the waste water sludge is treated in a mixer with quicklime (calcium oxide) to form a lime slurry. The quicklime reacts with the water present in the manure or the waste water sludge, the water content of which generally ranges between 90 and 99% by weight. Thus the following reaction takes place:

$$CaO + H_2O \rightarrow Ca(OH)_2 + 63,11 \text{ KJ.}$$

Owing to this highly exothermic reaction, the temperature of the mixture rises, and may increase to more than 90°C. Generally speaking, gases are produced during this process, mainly ammonia and water vapour, and these may be discharged through an exhaust system, and processed further. The manure mixture is thereby thickened and heat is produced.

From the lime-manure mixer, the mixture is preferably transferred to a silo or the like for intermediate storage, where the reaction can proceed further. Preferably, the mixture is continuously agitated in the silo to ensure that during the reaction period of about 24 hours as much water as possible can be discharged in the form of water vapour.

The mixture is subsequently transferred from the silo or the like to a next mixer, in which it is mixed with a quantity of a natural or synthetic binder, preferably a natural binder having a fibrous structure, such as peat or wood particles (saw dust), until a homogeneous and loose mass is obtained. Preferably, so much binder is added that the resulting product has a moisture content of between 20 and 60% by weight.

The mixture thus obtained can be directly formed into a granule, for example, in a pelletizer or other kind of former, and then dried in a dryer to a dry content of about 80-99%, preferably 85-90% by weight. Partial or complete drying is also possible prior to forming.

The process according to the invention may include adding certain desired additives before forming the granule. It is also possible for the granule formed to be mixed with other products, such as other fertilizers, minerals, and the like.

In a variant of the process according to the invention, a disintegrating agent is added prior to the formation of the granule, that is to say, a substance which promotes the disintegration of the granule under the influence of water. Examples of such substances are nonionic ethylene oxide adducts. The quantity thereof depends largely on the nature of the components of the granule, but generally ranges between 0.1 and 5% by weight, calculated on the total weight of the granule.

During the drying process, a part of the calcium hydroxide can extract carbon dioxide from the drying air, to form calcium carbonate and water.

The water is discharged from the dryer in the form of water vapour. The dryer is preferably driven with gases produced in the biogas plant, and the air of combustion may be the air discharged through the exhaust plants in the various stages of the process.

After cooling, the dry product can be packaged in bags, boxes, and the like, but bulk shipment is also possible.

The process according to the invention is productive of a product, i.e., a manure granule, with an acid binding value that can be varied.

The acid binding value and the content of organic material can be varied by varying the amounts to be added. If necessary, a supplementary quantity of ordinary lime, magnesium or other acid binding value may be added. At the same time, a fertilizing value is present in the form of nitrogen, potassium and phosphate. Pathogenic germs originally occurring in the manure or the sludge have lost their infectiveness.

The exhaust of effluent gases during all stages of the production process has the advantage that there is no effluence of environmentally harmful or unfriendly substances.

The product does not dust and can be scattered on the land by means of a fertilizer distributor.

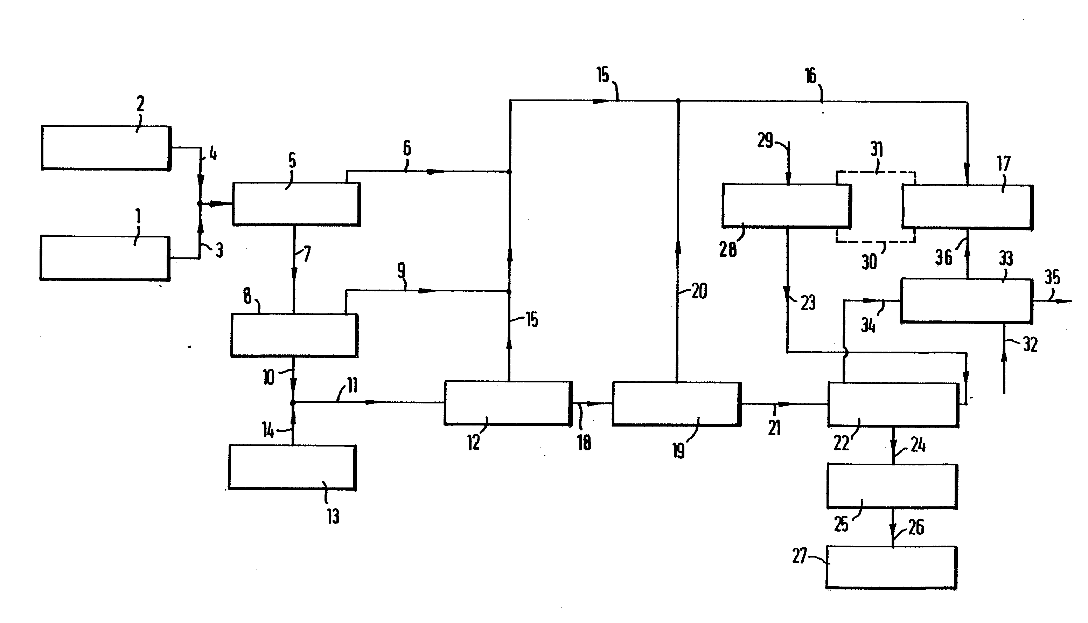

The invention will now be described with reference to the accompanying drawing of a process - scheme.

Manure or sludge, which may or may not originate from a biogas plant, is contained in a manure storage reservoir 1, while calcium oxide is present in reservoir 2. Through ducts 3 and 4, respectively, these two products are supplied to a mixer 5, in which the liquid manure is mixed with the calcium oxide. The gases thereby released are discharged through line 6. As soon as sufficient mixing has taken place, the mixture is supplied through 7 to an intermediate storage reservoir 8 for completing the reaction. The gases from reservoir 8 are discharged through 9. When the reaction is completed, the lime-manure mixture is supplied through ducts 10 and 11 to mixer 12, together with the organic binder which, from reservoir 13, is also supplied, through ducts 14 and 11, to mixer 12. The gases from mixer 12 are discharged through conduit 15 and, together with the gases discharged through 6 and 9, supplied through line 16 as combustion air to the heater 17 to be described hereinafter.

The mixture of manure, lime and organic binder is supplied from mixer 12 through 18 to a pelletizer 19. The gases from pelletizer 19 are supplied through 20 and 16 to heater 17 as combustion air. The granules coming from the pelletizer are passed through 21 to dryer 22, in which the granules are dried to the desired dry content by means of hot air supplied through line 23. The dried granules are passed through 24 to packaging machine 25 and thence through 26 to the final-product reservoir 27. The hot air to be used in dryer 22 is supplied through 23, which is connected to heater 28, to which clean drying air is supplied through 29. Heater 28 is heated indirectly through heater 17 and 30 and 31. The fuel needed for heater 17 may, for example, come from a biogas plant not shown, and is supplied through 32 to a heat exchanger 33, where first the tangible heat present in the drying air from dryer 22 is given off through line 34 to the fuel. The spent drying air is subsequently discharged from heat exchanger 33 through conduit 35. After being warmed up in heat exchanger 33 the fuel is supplied through 36 to heater 17.

The invention is illustrated in and by the following example, which is given by way of illustration only and should not be construed as limiting the invention in any way.

## Example

Using apparatus as described with reference to the accompanying drawings, 430 kg quicklime was added to 1 ton of slurry consisting of a mixture of pig's manure and calf manure, as a result of which a temperature of 94°C is reached in 20 minutes. The mixture was stored in intermediate storage reservoir 8 for 24 hours, whereafter peat was added to the remaining mixture, which resulted in a loose mass with a moisture content of 43%. This mixture was pelletized in a pelletizer 19 to produce granules having a diameter of about 3 mm, whereafter it was dried to a dry content of 96%. The final product has an acid binding value of about 42%. The N content was 0.6%, the $P_2O_5$ content 0.8%, the $K_2O$ content 0.7%, the MgO content 0.6%, and the nitrate content was less than 0.2%. The product was used as a dressing on land as a substitute for ground limestone.

## Claims

1. A process for treating manure and/or waste water sludge to form a granular product, characterized by mixing the manure and/or the waste water sludge with calcium oxide, with the proportion of calcium oxide being such that the temperature of the mixture increases to, and for some time remains at, at least 70°C, reacting the mixture until substantial completion of the reaction of calcium oxide with water, subsequently mixing the mixture with a natural or synthetic binder, and granulating the resulting product.

2. A process as claimed in claim 1, characterized in that the temperature remains, or is maintained, at at least 70°C for at least 3 hours.

3. A process as claimed in claim 1 or 2, characterized in that the quantity of calcium oxide ranges from 0.1 to 1.0 parts by weight per part by weight of manure or sludge.

4. A process as claimed in any of claims 1-3, characterized by using a natural or synthetic binder having a fibrous structure.

5. A process as claimed in claim 4, characterized by using peat, wood waste, or other natural products.

6. A process as claimed in any of claims 1-5, characterized by adding so much binder that, before being granulated, the resulting product has a dry solids content of 40-80% by weight.

7. A process as claimed in any of claims 1-6, characterized in that the end product is dried to a moisture content not exceeding 15% by weight.

8. A manure granule produced using the process as claimed in any of claims 1-7.

9. A method of fertilizing land, characterized by using a manure granule as claimed in claim 8.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-2 847 016 (VEDRA-LANDMASCHINEN GmbH) <br> * Claims; page 11, lines 15-24 * | 1-5,7,8 ,9 | C 05 F 3/00 <br> C 05 F 7/00 |
| Y | FR-A-2 294 147 (J.-C. BAZIAN) <br> * Claims 1-10 * | 1-5,7,8 ,9 | |
| Y | FR-A-2 319 407 (F. BOLSING) <br> * Examples 9,10 * | 1-5,7,8 ,9 | |
| Y | DE-A-3 128 673 (R. GUSTAV) <br> * Claims 1-8; pages 9-10; page 13, lines 24-29 * | 1-5,7,8 ,9 | |
| Y | DE-C- 942 516 (W. EIRICH et al.) <br> * Claims 1-2 * | 7 | |
| A | DE-C- 391 758 (ZELLSTOFFFABRIK WALDHOF) <br> * Claim * | 1 | |
| A | DE-A-2 917 123 (NIHON AUTOMATIC MACHINERY MFG. CO. LTD) <br> * Page 9, line 34 - page 10, line 4; page 8, line 24 - page 9, line 11 * | 1 | TECHNICAL FIELDS SEARCHED (Int. Cl.4) <br><br> C 05 F <br> C 05 D |
| Y | FR-A-2 156 888 (C.N. WATERS et al.) <br> * Claims * & GB-A-1 381 877 (Cat. D) | 8,9 | |
| Y | CH-A- 650 236 (M. CHOLLET) <br> * Claims * | 8,9 | |

The present search report has been drawn up for all claims

| Place of search | Date of completion of the search | Examiner |
|---|---|---|
| THE HAGUE | 04-07-1988 | SCHUT,R.J. |